# EUROPÄISCHE PATENTANMELDUNG

(11) **EP 3 034 324 A1**
(43) Veröffentlichungstag der Anmeldung: **22.06.2016**
(21) Anmeldenummer: 14198363.5
(22) Anmeldetag: 16.12.2014
(51) Int. Cl.: B60B 19/00, B60B 33/00, B60B 33/04, B60B 33/08, B62D 61/12

(54) **Mecanumradfahrzeug**

(71) Anmelder: Omniroll AG, 4512 Bellach (CH)
(72) Erfinder: Zdrahal, Pavel, 8330 Pfäffikon (CH); Uebelhart, Baudouin, 4515 Oberdorf (CH)
(74) Vertreter: Wagner, Kilian

(57) **Zusammenfassung**

Die Erfindung betrifft Mecanumradfahrzeug, insbesondere zum Transportieren einer Zuladung,
- mit mehreren, insbesondere drei oder vier, Mecanumradantrieben (2), jeweils umfassend Mecanumrad und einen, insbesondere elektromotorischen,
Antrieb- mit zum Ansteuern der Mecanumradantriebe (2) für einen omnidirektionalen Betrieb ausgebildeten Steuermitteln (13)
- mit einem Fahrgestell, dessen Gewichtskraft sowohl über die Mecanumräder (3) als auch über zusätzlich zu den Mecanumrädern (3) vorgesehenen Abstützmittel (6)des Fahrzeugs auf einem Untergrund (U) abstützbar ist,

wobei die Mecanumräder (3), insbesondere gemeinsam mit den zugehörigen Antrieben, zum Begrenzen des über die Mecanumräder (3) auf dem Untergrund (U) abzustützenden Gewichtskraftanteils des Fahrgestells (5) und einer etwaigen von diesem zu tragenden Zuladung (10) mit Hilfe von Kraftspeichermitteln (4) federnd gegenüber der Trägeranordnung gelagert sind.

## Beschreibung

Die Erfindung betrifft ein Mecanumradfahrzeug für omnidirektionale Fahrmanöver, insbesondere ohne mechanische Lenkung, gemäß Anspruch 1. Ferner betrifft die Erfindung ein System, gemäß Anspruch 13 sowie ein Verfahren zum Betreiben eines Mecanumradfahrzeugs gemäß Anspruch 15.

Mecanumradfahrzeuge sind allgemein bekannt. Bei einem Mecanumrad sind über den Umfang einer Felge des Rades mehrere drehbar gelagerte, in der Regel tonnenförmige Rollen unter einem Winkel zur Drehachse der Felge, von meist 45° drehbar angebracht. Nicht die Felge, sondern ausschließlich die vorgenannten Rollen stellen den Kontakt zum Untergrund her. Die Rollen haben dabei keinen direkten Antrieb und können sich frei um ihre jeweilige Rollendrehachse (welche sich winklig zur Felgen- bzw. Mecanumraddrehachse erstreckt) drehen. Das gesamte Mecanumrad kann dagegen von einem Antrieb, in der Regel einem Elektromotor mit veränderlichem Drehsinn und variabler Drehzahl angetrieben werden. Bekannte Mecanumradfahrzeuge haben üblicherweise vier Räder, die in einem Rechteck angeordnet sind. Durch eine entsprechende Ansteuerung der Antriebe der Mecanumräder kann durch eine individuelle Drehrichtungswahl der Mecanumräder gegenüber dem Untergrund (Fahrbahn) aus der Summe der Vektoren der einzelnen Mecanumräder eine Gesamtbewegungsrichtung für das Fahrzeug eingestellt werden, wobei beliebige Fahrzeugbewegungsrichtungen, d.h. ein omnidirektionaler Betrieb realisiert wird. Das Grundprinzip des Mecanumrades ist beispielsweise in der DE 2 153 019 A beschrieben.

Aus der WO 2013/041310 A1 ist ein gegenüber bis dato bekannten Mecanumrädern verbessertes Mecanumrad beschrieben, welches sich dadurch auszeichnet, dass zwei, jeweils rotierbare Rollen tragende Felgen des Mecanumrades über Dämpfungsmittel miteinander verbunden sind, die eine gedämpfte Relativbewegung der Felgen zueinander zulassen, wodurch unkontrollierte Schwebezustände bisheriger Mecanumradfahrzeuge vermieden werden, die auf den Wechsel eines entlang der Rollen wandernden Abstützpunktes von Rolle zu Rolle beim Drehen der Felge zurückzuführen waren.

Mecanumradfahrzeuge für einen omnidirektionalen Betrieb, insbesondere mit den zuvor beschriebenen, verbesserten Mecanumrädern haben sich bewährt. Aufgrund des vergleichsweise komplexen Aufbaus von Mecanumrädern zu herkömmlichen, abrollenden Rädern ist die maximale Traglast von Mecanumrädern engen Grenzen unterworfen, wodurch sich Mecanumradfahrzeuge bisher nur bedingt zum Tragen von Lasten (Zuladungen) oder zum Antreiben besonders schwerer Fahrzeuge eignen.

Ausgehend von dem vorgenannten Stand der Technik liegt daher der Erfindung die Aufgabe zugrunde, ein hinsichtlich seiner Tragfähigkeit verbessertes Mecanumradfahrzeug anzugeben, mit welchem trotz eines hohen Fahrzeuggewichtes und/oder einer hohen Zuladung ein Omnidirektionalbetrieb möglich ist. Ferner besteht die Aufgabe darin, ein System anzugeben, umfassend ein entsprechend verbessertes Mecanumradfahrzeug sowie eine von diesem getragene Ladung. Darüber hinaus besteht die Aufgabe darin, ein Betriebsverfahren zum vorteilhaften Betreiben eines entsprechend verbesserten Mecanumradfahrzeuges anzugeben.

Diese Aufgabe wird hinsichtlich des Mecanumradfahrzeuges mit den Merkmalen des Anspruchs 1 gelöst.

Hinsichtlich des Systems wird die Aufgabe mit den Merkmalen des Anspruchs 13 und hinsichtlich des Verfahrens mit den Merkmalen des Anspruchs 15 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Das nach dem Konzept der Erfindung ausgebildete Mecanumradfahrzeug umfasst zunächst mehrere, insbesondere drei oder vier Mecanumradantriebe, wobei die Mecanumräder bevorzugt die Ecken eines gedachten Dreiecks oder Rechtecks begrenzend angeordnet sind. Insbesondere für den Fall, dass vergleichsweise große Zuladungen transportiert werden sollen und/oder das Gesamtgewicht des Mecanumradfahrzeuges vergleichsweise hoch ist, mit der Folge, dass große Anrollwiderstände überwunden werden müssen, ist es denkbar, mehr als drei oder vier Mecanumradantriebe, jeweils umfassend ein Mecanumrad und einen, insbesondere elektromotorischen Antrieb, vorzusehen, wobei zur Gewährleistung einer optimierten Steuerung es bevorzugt ist, wenn die mehr als drei oder vier Mecanumradantriebe wiederum in drei oder vier Gruppen zusammengefasst sind, die gruppenweise von den Steuermitteln ansteuerbar sind. Grundsätzlich ist es auch denkbar, einem der Mecanumräder oder mehreren der Mecanumrädern, vorzugsweise sämtlichen Mecanumrädern mehrere Antriebe, insbesondere einen Antrieb auf jeder Radseite zuzuordnen, um das maximal aufbringbare Drehmoment zu erhöhen. Auch in diesem Fall ist es bevorzugt, wenn die Antriebe in drei oder vier Gruppen zusammengefasst werden, die von den Steuermitteln ansteuerbar sind, wobei bevorzugt die Antriebe jeder Gruppe von den Steuermitteln gleich angesteuert werden.

Unabhängig von der konkreten, vorgenannten Ausgestaltung umfasst jedenfalls jedes Mecanumrad mehrere, über den Umfang verteilt angeordnete, bevorzugt tonnenförmige Rollen, wobei die Rollendrehachsen der Rollen winklig zur jeweiligen Mecanumrad- bzw. Felgendrehachse des Mecanumrades angeordnet sind. In an sich bekannter Weise sind die Mecanumantriebe einzeln oder in Gruppen zur Realisierung eines omnidirektionalen Betriebs über Steuermittel ansteuerbar bzw. angesteuert, mit denen die Mecanumräder oder Mecanumradgruppen mit individuellen Geschwindigkeiten und/oder Drehrichtungen rotierbar sind, wobei die gewünschte, bzw. vorgegebene (Gesamt- bzw. resultierende) Bewegungsrichtung des Mecanumradfahrzeuges aus einer Summe von Einzelvektoren der Mecanumräder resultiert. Auf diese Weise kann trotz bevorzugtem Verzicht auf eine mechanische Lenkung jede beliebige Bewegungsrichtung, d.h. ein omnidirektionaler Betrieb realisiert werden und es besteht die Möglichkeit zum Rotieren bzw. Wenden des gesamten Mecanumradfahrzeuges auf der Stelle und/oder während des Bewegens des Mecanumradfahrzeuges in einer gewünschten Bewegungsrichtung. Insoweit stimmt das zuvor beschriebene Mecanumradfahrzeug gemäß der Erfindung mit bekannten Mecanumradfahrzeugen überein. Zur Realisierung einer erhöhten Tragkraft bzw. Zulademöglichkeit des Mecanumradfahrzeuges ist nun vorgesehen, dass zusätzlich zu den Mecanumrädern an dem Fahrgestell fixierte oder an einem an dem Fahrgestell beweglich gelagerten bzw. festgelegten, insbesondere höhenverstellbaren Tragelement, Abstützmittel (nicht in der Form von Mecanumrädern) vorgesehen sind, um einen Gewichtskraftkraftanteil, insbesondere einen Haupt-Gewichtskraftanteil eines Fahrgestells des Mecanumradfahrzeuges und einer etwaigen Zuladung auf einem Untergrund (Fahrbahn) abzustützen. Gleichzeitig ist im Rahmen der Erfindung vorgesehen, den Anteil der Gewichtskraft des Fahrgestells und etwaiger Aufbauten und/oder einer etwaigen Zuladung, der über die Mecanumräder auf dem Untergrund abzustützen ist, zu begrenzen, um somit eine unzulässige Überlastung der Mecanumräder zu verhindern. Hierzu sind die Mecanumräder gegenüber dem Fahrgestell (parallel zur Gewichtskraftrichtung des Fahrzeugs und/oder einer Zuladung) federnd an dem Fahrgestell fixiert und zwar mit Hilfe von Kraftspeichermitteln, die so ausgebildet und angeordnet sind, dass nur eine Teil-Gewichtskraft einer Gesamtgewichtskraft von den Mecanumrädern auf dem Untergrund abzustützen ist - hier müssen die Kraftspeichermittel in vertikaler Richtung (d.h. parallel zur Gewichtskraftrichtung) und/oder senkrecht (zumindest mit einer Federkraftkomponente) zur Flächenerstreckung des Fahrgestells bzw. zu einer von den Mecanumrädern definierten Abstützebene zum Abstützen auf dem Untergrund federnd ausgebildet sein. Bevorzugt sind die Kraftspeichermittel dabei derart ausgebildet, dass der Federweg begrenzt ist, so dass ein Restfederweg (in der Gewichtskraftrichtung) bei sich auf dem Untergrund abstützenden Abstützmitteln verbleibt bzw. gegeben ist. Für den Fall, dass auch die Abstützmittel federnd gelagert werden sollen, was fakultativ möglich ist, ist die Federsteifigkeit der Kraftspeichermittel bevorzugt geringer zu wählen als eine Federsteifigkeit von fakultativen, bevorzugt zwischen den Abstützmitteln und dem Fahrgestell angeordneten Abstützkraftspeichermitteln, mit denen die Abstützmittel ggf. federnd gegenüber dem Fahrgestell gelagert sind.

Im Ergebnis wird ein Mecanumradfahrzeug erhalten, welches bei Beibehaltung seiner omnidirektionalen Betriebsweise durch eine entsprechende Ansteuerung der Mecanumräder bzw. von deren Antrieben ermöglicht und welches gleichzeitig in der Lage ist, eine vergleichsweise große Zuladung zu transportieren, da aufgrund einer entsprechenden federnden Lagerung der Mecanumräder gegenüber einem Fahrgestell und dem zusätzlichen Vorsehen von Abstützmitteln gewährleistet ist, dass lediglich ein Gewichtskraftanteil des Fahrgestells und/oder einer etwaigen Zuladung über die Mecanumräder auf dem Untergrund abgestützt ist, während der andere bzw. verbleibende Gewichtskraftanteil, insbesondere der größte Gewichtskraftanteil über die Abstützmittel auf dem Untergrund abstützbar ist.

Hierzu befinden sich dann eine Abstützfläche der Abstützmittel und die Abstützfläche der Mecanumräder gemeinsam auf dem Untergrund, insbesondere in einer gemeinsamen Ebene (bei ideal planem Untergrund).

Bevorzugt ist dabei die Federkraft bzw. Federsteifigkeit der Kraftspeichermittel so auf das Gewicht des Fahrgestells, etwaiger Aufbauten und/oder einer etwaigen Zuladung, abgestimmt, dass trotz einer Begrenzung des über die Mecanumräder abzustützenden Gewichtskraftanteils ein noch ausreichender Gewichtskraftanteil über die Mecanumräder auf dem Untergrund abstützbar bzw. abgestützt ist, um eine (ausreichende) Traktion der Mecanumräder auf dem Untergrund zur Sicherstellung eines Vortriebes zum omnidirektionalen Bewegen des Mecanumradfahrzeuges zu gewährleisten. Insbesondere sollte sichergestellt sein, dass die Traktion ausreichend ist, um ein sogenanntes Anreißmoment, welches notwendig ist, um einen Anrollwiderstand des Fahrzeuges zu überwinden auf den Untergrund weitergegeben bzw. an diesem abgestützt werden kann.

Dabei bilden die Mecanumradantriebe, das Fahrgestell und die Abstützmittel eine untrennbare Einheit, die gemeinsam verfahrbar ist, bevorzugt für den Fall der nicht Zuladung einer Zuladung so, dass sich die Abstützmittel, wie später noch im Rahmen einer vorteilhaften Weiterbildung erläutert werden wird, nicht auf dem Untergrund abstützen. Neben einer grundsätzlichen Eignung eines nach dem Konzept der Erfindung ausgebildeten Mecanumradfahrzeugs zum Tragen von Zuladungen ist es aufgrund der Erfindung auch erstmals möglich, vergleichsweise schwere Mecanumradfahrzeuge, welche beispielsweise schwere, dauerhafte Aufbauten aufweisen zu konstruieren und die Gewichtskraft dieser Aufbauten nur teilweise über die Mecanumräder und zum anderen Teil über die Abstützmittel am Boden abzustützen. Ganz besonders bevorzugt ist ein im Rahmen der Erfindung realisierbarer Fahrzeugtyp, bei welchem auf dem Fahrgestell Hebemittel fixiert sind, mit denen eine Zuladung relativ zu dem Fahrgestell höhenverstellbar ist. Eine solche Ausführungsform ermöglich es, unter eine Zuladung zu fahren, die Zuladung relativ zu dem Fahrgestell mit Hilfe der Hebemittel höhenzuverstellen, so dass ein Teil von der Zuladungsgewichtskraft über die Abstützmittel auf dem Untergrund abgestützt wird und nur ein Teil der Gewichtskraft über die Mecanumräder, wobei dieser Gewichtskraftanteil ausreichend groß gewählt ist, um eine Traktion der Mecanumräder auf dem Untergrund zu gewährleisten.

Im Hinblick auf die konkrete Ausgestaltung der Abstützmittel gibt es unterschiedliche Möglichkeiten. Im einfachsten Fall ist es möglich, Abstützmittel durch Antreiben der Mecanumräder schleifend über den Untergrund zu bewegen. Besonders bevorzugt ist es jedoch, wenn sich die Abstützmittel zur Reibungsminimierung zusammen mit dem Fahrgestell durch Antreiben der Mecanumräder rollend über den Untergrund fortbewegend ausgebildet sind. Ganz besonders bevorzugt ist es dabei, wenn die Abstützmittel ein um eine, sich vorzugsweise parallel zu einem Untergrund erstreckende, Drehachse, bevorzugt um 360°, rotierbares Lastrad, insbesondere in Form einer Lastrolle aufweisen, welches bei einem Richtungswechsel des Fahrzeugs durch eine entsprechende Ansteuerung der Mecanumradantriebe um eine sich vorzugsweise senkrecht zur Drehachse des Lastrades erstreckenden Lenkachse relativ zu dem Fahrgestell rotierbar ist. Besonders zweckmäßig ist es, mehrere derartig ausgebildeter und gelenkig angeordneter Lasträder für eine verbesserte Lastverteilung vorzusehen. Ganz besonders bevorzugt sind vier, die Ecken eines Rechtecks begrenzende, Lasträder vorgesehen. Das mindestens eine Lastrad ist dabei bevorzugt als "herkömmliches Rad ohne zusätzliche, relativ zu dem Rad rotierbare Rollen", d.h. nicht als Mecanumrad ausgebildet und bevorzugt nicht aktiv, sondern nur mittelbar über die Mecanumräder angetrieben. Bevorzugt ist das mindestens eine Lastrad auch nicht aktiv um die Gelenkachse mittels eines Lenkantriebs rotierbar, sondern nur passiv durch einen entsprechenden Richtungswechsel des Fahrzeugs, wobei auch eine Ausführungsform mit aktiver, d.h. aktuierter Lenkung realisierbar ist, die in Abhängigkeit der Fahrzeugrichtung das Lastrad um eine Gelenkachse direkt angetrieben rotiert. Zusätzlich oder alternativ zu einem um eine Drehachse sowie um eine Gelenkachse rotierbaren Lastrad ist es auch denkbar, Abstützmittel in Form einer rotierbar, insbesondere in einem Käfig angeordneten Rolle vorzusehen, die omnidirektional rollen und somit einer von den Mecanumradantrieben vorgegebenen Fahrzeugrichtung folgen kann. Denkbar ist es grundsätzlich auch, Abstützmittel in Form einer rotierbaren Kette, in der Art eines Kettenfahrzeugs vorzusehen, wobei es in diesem Fall bevorzugt ist, eine aktive Lenkung zum Verschwenken eines derartigen Kettenantriebes (eine Kette kann hier auch aus einem gummielastischen Material ausgebildet sein) vorzusehen, um somit eine von der jeweiligen Fahrtrichtung des Mecanumrades abhängige Vorzugsausrichtung des Kettenantriebes einzustellen. Unabhängig von der konkreten Ausgestaltung der Abstützmittel sind diese bevorzugt jedoch nicht aktiv sondern nur mittelbar über die Mecanumradantriebe antreibbar.

Insbesondere bei einem Fahrzeug, welches zum Tragen bzw. transportieren einer Zuladung ausgebildet ist, hat es sich als vorteilhaft herausgestellt, die Kraftspeichermittel für die Mecanumräder derart auszubilden oder abzustellen, dass die Abstützmittel bei nicht mit einer Zuladung beaufschlagtem Fahrgestell, welches gegebenenfalls noch Aufbauten trägt, oberhalb einer von den Mecanumrädern definierten Abstützebene, sprich oberhalb des Untergrundes angeordnet sind, und sich erst bei Beaufschlagen mit einer dimensionierten bzw. schweren Zuladung bei gleichzeitiger bzw. automatischer Erhöhung der Federspannung der Kraftspeichermittel zusammen mit Fahrgestell, absenken. Mit anderen Worten ist eine Ausführungsform von besonderem Vorteil, bei der die Abstützmittel während einer Leerfahrt des Mecanumradfahrzeuges den Untergrund nicht kontaktieren, sondern erst bei Aufbringen einer entsprechenden Zuladung, welche gleichzeitig dafür sorgt, dass die Mittel, mit denen die Mecanumräder federnd gegenüber dem Fahrgestell gelagert sind, gespannt werden, wobei, wie bereits erläutert, selbst bei in der von den Mecanumrädern definierten Abstützebene befindlichen Abstützmitteln ein Restfederweg der Kraftspeichermittel parallel zur Gewichtskraftrichtung aufrecht erhalten bleiben sollte, insbesondere um Unebenheiten des Untergrundes ausgleichen zu können und um zu verhindern, dass eine zu große Last über die Mecanumräder abgestützt werden muss. Dies ist wichtig, um auch bei Unebenheiten des Untergrundes einen kontrollierten omnidirektionalen Vortrieb des Mecanumradfahrzeuges zu gewährleisten.

Als besonders vorteilhaft hat es sich herausgestellt, wenn die Abstützmittel höhenverstellbar an dem Fahrgestell angeordnet bzw. festgelegt sind, derart, dass ein Abstand zwischen einer von den Abstützmitteln gebildeten Abstützfläche, mit der sich die Abstützmittel zum Abstützen einer Teillast, d.h. eines Gewichtskraftanteils auf dem Untergrund abstützen und dem Untergrund bzw. der von den Mecanumrädern definierten Abstützebene und somit der Abstand der vorgenannten Abstützfläche zu dem Fahrgestell einstellbar ist, um den Federweg, den die Kraftspeichermittel beim Beladen des Fahrgestells mit einer Zuladung zurücklegen können, bis dass die Abstützfläche der Abstützmittel den Untergrund erreicht und/oder fakultative Abstützkraftspeichermittel entsprechend des Zuladungsgewichtes maximal gespannt sind, einstellen zu können. Durch diese Maßnahme wird gleichzeitig die maximale, von den Mecanumrädern auf den Untergrund abzustützende Gewichtskraft eingestellt. Wie später noch erläutert werden wird, folgt diese Abstandseinstellung bevorzugt in Abhängigkeit einer gemessenen Gewichtskraft der Zuladung.

Wie eingangs bereits angedeutet, ist eine Ausführungsform realisierbar, bei welcher ausschließlich die Mecanumräder gegenüber dem Fahrgestell mit Hilfe der Kraftspeichermittel federnd zur Begrenzung der maximal zu tragenden bzw. abzustützenden Last gelagert sind und die Abstützmittel nicht. Alternativ ist es denkbar, nicht nur die Mecanumräder federnd gegenüber dem Fahrgestell zu lagern, sondern zusätzlich auch die Abstützmittel über Abstützkraftspeichermittel, wobei dann die Federsteifigkeit der Abstützkraftspeichermittel bevorzugt größer ist als die der Kraftspeichermittel, um somit sicherzustellen, dass nur ein Anteil der Gewichtskraft über die Mecanumräder auf dem Untergrund abgestützt wird bzw. abstützbar ist.

Besonders zweckmäßig ist es, wenn die Kraftspeichermittel derart ausgebildet sind, dass selbst bei mit einer Zuladung beaufschlagtem Mecanumradfahrzeug ein Restfederweg der Kraftspeichermittel parallel zur Gewichtskraftrichtung zur Gewährleistung eines Restfedervermögens verbleibt. Mit anderen Worten ist es bevorzugt, wenn der theoretisch bis zum Erreichen eines Anschlages maximal zurücklegbare Federweg parallel zur Gewichtskraftrichtung, d.h. die entsprechende Federwegkomponente, länger ist als der Abstand der Abstützfläche der Abstützmittel zum Untergrund bzw. zu der von den Mecanumrädern definierten Abstützebene in einem unbeladenen Zustand und/oder länger ist als ein maximaler Federweg fakultativer Abstützkraftspeichermittel parallel zu der vorgenannten Gewichtskraftrichtung.

Um bei unterschiedlichen Zuladungen eine ausreichende Traktion der Mecanumradantriebe bzw. der Mecanumräder auf dem Untergrund sicherzustellen, hat es sich als vorteilhaft herausgestellt, wenn Mittel zum Einstellen der Vorspannung der Kraftspeichermittel und/oder eines maximaler Federweges, den die Kraftspeichermittel unter Erhöhung der Federspannung zurücklegen können, bis die Abstützmittel auf dem Untergrund aufsetzen bzw. die von den Mecanumrädern definierte Abstützebene erreichen und/oder bis fakultative Abstützkraftspeichermittel entsprechend der Zuladung maximal gespannt sind, einstellbar ist und somit auch der maximal von den Mecanumrädern auf dem Untergrund abzustützende Gewichtsanteil. Hierbei kann es sich um manuell oder bevorzugt mit Hilfe von Aktuatormitteln, insbesondere eines elektromotorischen Antriebs antreibbare Mittel zur Einstellung der Vorspannung und/oder des Federwegs handeln. Der vorgenannte Federweg der Kraftspeichermittel kann beispielsweise durch Abstandsvariation einer Abstützfläche der Abstützmittel zum Untergrund bzw. zum Fahrgestell eingestellt werden, durch eine entsprechende höhenverstellbare Anordnung der Abstützmittel relativ zu dem Fahrgestell. Für den Fall einer federnden Lagerung der Abstützmittel gegenüber dem Fahrgestell über entsprechende Abstützkraftspeichermittel können zusätzlich oder alternativ zu den vorgenannten Mitteln zur Einstellung der Vorspannung der Kraftspeichermittel (manuelle oder aktuierte) Mittel zur Einstellung der Vorspannung der Abstützmittel am Fahrzeug vorgesehen sein.

Besonders zweckmäßig ist es, wie erwähnt, wenn die Vorspannung der Kraftspeichermittel oder etwaiger Abstützmittel und/oder ein (maximaler) Federweg der Kraftspeichermittel (insbesondere der Abstand einer Abstützfläche von Abstützmitteln zu einer Mecanumradabstützebene bzw. zum Untergrund) in Abhängigkeit der Gewichtskraft eine Zuladung einstellbar ist, wobei es besonders bevorzugt ist, wenn die Einstellung automatisiert, d.h. über Aktuatormittel vornehmbar ist. Als besonders zweckmäßig hat es sich nun herausgestellt, wenn die entsprechende Gewichtskraft mit Hilfe von Messmitteln des Mecanumradfahrzeuges bestimmbar ist. Dass also das Mecanumradfahrzeug Gewichtskraftmessmittel aufweist, die so ausgebildet und angeordnet sind, dass die Gewichtskraft einer Zuladung oder eines Gewichtskraftanteils dieser Zuladung, welcher über die Abstützmittel oder mindestens ein Mecanumrad auf dem Untergrund abstützbar ist messbar ist, wobei diese Messmittel (Kraftmessmittel) signalleitend mit entsprechenden Steuermitteln zum Ansteuern der vorgenannten Aktuatormittel verbunden sind, wobei die Steuermittel die Aktuatormittel zum Einstellen der Vorspannung der Kraftspeichermittel und/oder des vorgenannten Federweges und/oder einer Vorspannung von etwaigen Abstützkraftspeichermitteln in Abhängigkeit eines Sensorsignals der Messmittel, d.h. in Abhängigkeit des Zuladungsgewichtes (oder Gewichtsanteils) variieren bzw. einstellen, um einerseits die Belastung der Mecanumräder zu begrenzen und andererseits eine ausreichende Traktion, insbesondere zum Überwinden eines Anrollwiderstandes des Mecanumradfahrzeuges zu gewährleisten.

Für den bevorzugten Fall der Ausbildung des Mecanumradfahrzeuges als Lastfahrzeug, welches geeignet und bestimmt ist zur Aufnahme bzw. zum Transportieren einer Zuladung hat es sich als vorteilhaft herausgestellt, wenn auf dem Fahrgestell eine, insbesondere kippbare, Ladeeinrichtung, bevorzugt eine Ladewanne zur Aufnahme der Zuladung angeordnet ist.

Zusätzlich oder alternativ können auf dem Fahrgestell Hebemittel (Abtandsvariationsmittel) zum relativen Höhenverstellen (Abstandverstellen) einer Zuladung relativ zu dem Fahrgestell vorgesehen werden, wobei bei einer bevorzugten Ausgestaltung des Mecanumradfahrzeuges mit bei nicht Beaufschlagung mit einer Zuladung von dem Untergrund abgehobenen bzw. beabstandeten Abstützmitteln die Hebemittel das Fahrgestell in Richtung Untergrund bewegen und dabei die Kraftspeichermittel der Mecanumräder spannen, bis die Abstützmittel den Untergrund und/oder fakultative Abstützkraftspeichermittel gespannt sind, erreichen. Anders ausgedrückt sind die Hebemittel zum Relativverstellen einer Hebe- bzw. Auflage- bzw. Transportfläche zu dem Fahrgestell ausgebildet. Bevorzugt umfassen die Hebemittel eine Gabel, insbesondere eine Hebegabel in der Art eines Gabelstaplers oder eine Hebeplattform, wobei Hebegabel oder Hebeplattform dann die vorerwähnte Auflage bzw. Transportfläche der Hebemittel zur Aufnahme der Last bilden bzw. definieren. Bevorzugt ist die Auflage- bzw. Transportfläche zum Aufladen einer Zuladung parallel zur von den Mecanumrädern definierten Abstützebene ausgerichtet bzw. angeordnet.

Im Hinblick auf die konkrete Ausgestaltung der Kraftspeichermittel zum federnden Lagern der Mecanumräder, insbesondere zusammen mit dem jeweiligen Antrieb (insbesondere jeweils ein Elektromotor) gibt es unterschiedliche Möglichkeiten. In dem einfachsten Fall sind die Kraftspeichermittel (Federmittel) als klassische Federn, beispielsweise als Druckfedern, wie Schraubenfedern und/oder Torsionsfedern ausgebildet; die Kraftspeichermittel können auch Kombinationen unterschiedlich gestalteter Federn aufweisen. Bevorzugt sind solche Federn aus Metall ausgebildet und/oder aufgrund ihrer Geometrie federnd ausgebildet. Ebenfalls ist es denkbar, dass die Kraftspeichermittel Gasdruckfedern oder hydraulische Federn oder eine Kombination aus mechanischen Federn, Gasdruckfedern und/oder hydraulischen Federn umfassen. Auch ist es denkbar ausschließlich oder zusätzlich aufgrund der Materialwahl (z.B. Elastomermaterial) federnde bzw. kraftspeichernde Kraftspeichermittel vorzusehen. Wesentlich ist es, dass die Kraftspeichermittel derart ausgebildet und angeordnet sind, dass diese bei sich auf dem Untergrund abstützenden Abstützmittel für eine Begrenzung der von den Mecanumrädern abzustützenden Gewichtskraft Sorge tragen, d.h. zur Kraftpufferung dienen.

Ganz besonders bevorzugt ist es, wenn die Mecanumräder, insbesondere zusammen mit ihren Antrieben, d.h. die Mecanumradantriebe über federnd gelagerte Stützarme an dem Fahrgestell angeordnet bzw. gegenüber diesem federnd gelagert sind, wobei die Stützarme schwenkbar an dem Fahrgestell fixiert sind, derart, dass sich durch Verschwenken der Stützarme die Federspannung der Kraftspeichermittel ändert. Ganz besonderes bevorzugt ist eine Ausführungsform, bei der der Schwenkwinkel zum Einstellen der Kraftspeichermittelvorspannung manuell oder mit Hilfe von Aktuatormitteln veränderbar ist, um die von den Mecanumrädern zu tragende Gewichtskraft bzw. Gewichtskraftanteil zu variieren. Als besonders vorteilhaft hat es sich dabei herausgestellt, wenn die Kraftspeichermittel Torsionsfedern umfassen, welche durch Schwenken der Stützarme spannbar sind.

Zum Gewährleisten eines optimalen Untergrundkontaktes und zur Vermeidung von aus dem Stand der Technik bekannten Schwebezuständen hat es sich als vorteilhaft herausgestellt, wenn die Mecanumräder, wie aus der WO 2013/041310 bekannt ist, zwei Felgen umfassen, die jeweils rotierbar angeordnete Rollen über ihren Umfang tragen, wobei die Felgen über Dämpfungsmittel miteinander verbunden sind, die eine begrenzte Relativbewegung der Felgen zulassen, insbesondere eine Relativbewegung in Umfangsrichtung und/oder senkrecht zu einer Mecanumraddrehachse und/oder senkrecht zu einer Felgendrehachse der Felgen und/oder kippwinklig zueinander. Bevorzugt sind die Mecanumräder wie in der vorgenannten internationalen Patentanmeldung beschrieben ausgebildet.

Die Erfindung führt auch auf ein System, umfassend ein nach dem Konzept der Erfindung ausgebildetes Mecanumradfahrzeug sowie eine von diesem getragene (wieder abnehmbare bzw. entfernbare) Zuladung, wobei eine Gewichtskraft der Zuladung anteilig über die Mecanumräder und anteilig über die Abstützmittel auf einem Untergrund abgestützt ist. Zudem führt die Erfindung auch auf ein Verfahren zum Betreiben eines nach dem Konzept der Erfindung ausgebildeten Mecanumradfahrzeuges. Kern des Verfahrens ist es, dass ein Teil der Gewichtskraft des Fahrgestells und/oder einer Zuladung der Mecanumräder und der andere Teil der Gewichtskraft über die Abstützmittel auf dem Untergrund abgestützt wird. Bevorzugt ist es dabei, wenn die Gewichtskraft, die über die Mecanumräder abgestützt wird in Abhängigkeit einer gemessenen Gewichtskraft der Zuladung eingestellt wird. Insbesondere durch eine entsprechende Anpassung der Vorspannung der Kraftspeichermittel und/oder einen Federweg der Kraftspeichermittel, insbesondere einen maximalen Federweg der Kraftspeichermittel, den diese zurücklegen müssen, bis die Abstützmittel den Untergrund erreichen und/oder bis fakultative Abstützkraftspeichermittel die maximal von der Zuladung verursachte Federspannung erreichen.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1a: ein gemäß nach dem Konzept der Erfindung ausgebildetes Mecanumradfahrzeug zum Tragen von Lasten ohne Zuladung,
- Fig. 1b: das Mecanumradfahrzeug gemäß Fig. 1a mit aufgesetzter Ladung,
- Fig. 2: eine Ansicht auf eine nach dem Konzept der Erfindung ausgebildete Ausführungsform eines Mecanumradfahrzeugs von unten,
- Fig. 3: in einer stark schematisierten Darstellung eine alternative Ausführungsform eines Mecanumradfahrzeuges in einer Seitenansicht,
- Fig. 4: eine stark schematisierte Ansicht einer alternativen Ausführungsform eines nach dem Konzept der Erfindung ausgebildeten Mecanumradfahrzeuges mit auf einem Fahrgestell angeordneten Hebemitteln, hier beispielhaft umfassend eine Hubgabe, und
- Fig. 5: eine ebenfalls stark schematisierte, alternative Ausführungsform eines Mecanumradfahrzeuges.

In den Figuren sind gleiche Elemente und Elemente mit der gleichen Funktion mit den gleichen Bezugsziffern gekennzeichnet.

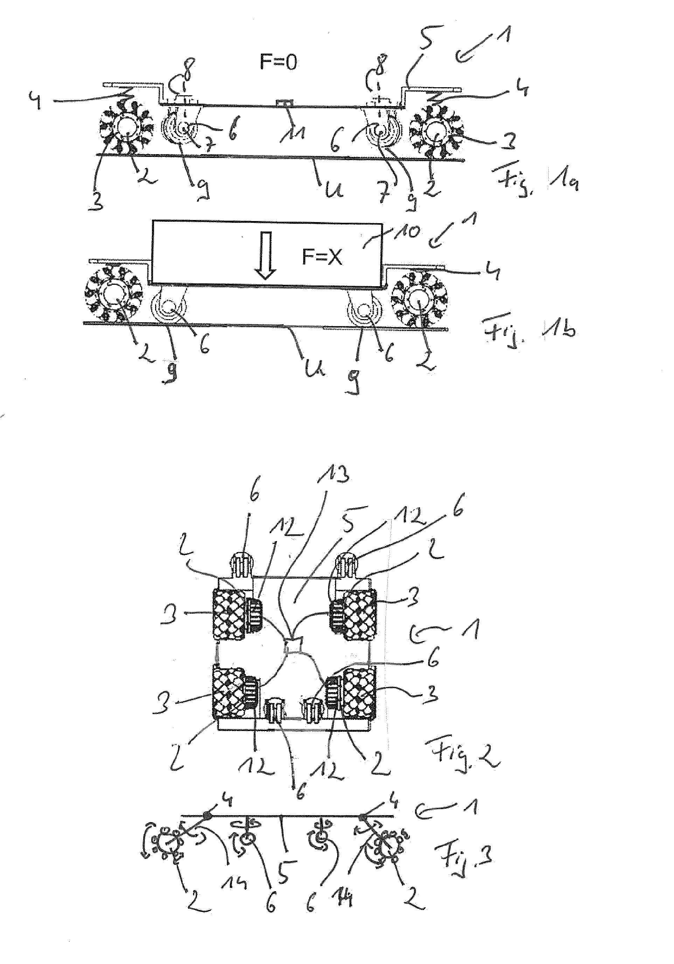

In den Fig. 1a und 1b ist das Grundprinzip eines nach dem Konzept der Erfindung ausgebildeten Mecanumradfahrzeuges 1 gezeigt. Dieses umfasst insgesamt vier Mecanumradantriebe 2, die die Ecken eines gedachten Rechteckes begrenzen und von denen in der Seitenansicht nur zwei in Richtung einer Längsrichtung des Fahrzeuges 1 beabstandete Antriebe zu sehen sind. Die beiden weiteren Mecanumradantriebe befinden sich in der Zeichnungsebene dahinter. Jeder Mecanumradantieb 2 umfasst ein Mecanumrad 3 mit nicht gezeigtem, daran angeordnetem, elektromotorischen Antrieb. Sämtliche Antriebe sind in an sich bekannter Weise mit nicht dargestellten Steuermitteln zum individuellen Antreiben der Mecanumräder 3 zur Gewährleistung eines omnidirektionalen Betriebes verbunden.

Zu erkennen ist, dass die Mecanumräder 3 über Kraftspeichermittel 4 federnd gelagert sind gegenüber einem Fahrgestell 5, welches die Mecanumräder 3 mit ihren Antrieben trägt. Die Kraftspeichermittel 4 sind lediglich beispielhaft als Schraubenfeder im Rahmen einer vereinfachten Darstellung wiedergegebenen. Selbstverständlich sind auch andere, federnde Lagerungen möglich - wesentlich ist, dass zumindest eine senkrecht zu einem Untergrund U orientierte Federkaftkomponente zwischen dem Fahrgestell 5 und den Mecanumrädern 3 wirkt.

Neben den Mecanumrädern 3 trägt das Fahrgestell 5 mit diesem fest verbundene Abstützmittel 6, hier in der Form von um jeweils eine Drehachse 7 sowie um eine senkrecht dazu orientierte Gelenkachse 8 rotierbar gelagerte Lasträder.

Die Abstützmittel 6 sind weder um die Drehachse 7 noch um die Gelenkachse 8 mittels eines separaten Antriebs unmittelbar antreibbar, sondern rotieren bzw. verschwenken um diese in Abhängigkeit einer Fortbewegung des Mecanumradfahrzeuges 1 aufgrund des Antriebs der Mecanumräder 3.

In Fig. 1a ist ein Zustand ohne eine Zuladung gezeigt. Es wirkt eine in dem gezeigten Ausführungsbeispiel im Wesentlichen von dem Fahrgestell 5 verursachte Gewichtskraft über die Kraftspeichermittel 4 auf die Mecanumräder 3, so dass diese in dem gezeigten Zustand diese gesamte Gewichtskraft auf dem Untergrund abstützen. Die von den Abstützmitteln 6, genauer von den Lasträdern gebildeten Abstützflächen 9 (Sollkontaktflächen zum Untergrund) sind zum Untergrund U beabstandet.

Fig. 1b zeigt das Mecanumradfahrzeug 1 gemäß Fig. 1a mit aufgesetzter Zuladung (Last) 10. Diese hat eine Gewichtskraft F von X Nm. Aufgrund der Zuladung 10 bzw. aufgrund von deren Gewichtskraft F werden die Kraftspeichermittel 4 durch Zurücklegen eines Federweges gespannt, in dem das Fahrgestell 5 mit Zuladung 10 entgegen der Federkraft der Kraftspeichermittel 4 in der Gewichtskraftrichtung selbsttätig nach unten verstellt, bis die Abstützmittel 6 sich mit ihrer Abstützfläche 9 auf dem Untergrund abstützen. Es bleibt ein geringer Restfederweg der Kraftspeichermittel zum Ausgleich von Unebenheiten des Untergrundes U erhalten (Restfedervermögen). Durch entsprechende Wahl der Kraftspeichermittel 4 und des verbleibenden Restfederweges bzw. Restfedervermögens ist die über die Mecanumräder 3 abzustützende Gewichtskraft begrenzt. Mit anderen Worten wird nur ein Anteil der Gewichtskraft der Zuladung 10 über die Mecanumräder und der andere Teil über die Abstützmittel auf dem Untergrund abgestützt. Die Kraftspeichermittel 4 sind so gewählt, dass bezogen auf die Zuladung 10 bzw. das entsprechende Gesamtgewicht ausreichend Traktion der Mecanumräder 3 auf dem Untergrund U gegeben ist, um das Mecanumradfahrzeug (omnidirektional) fortzubewegen.

Besonders bevorzugt ist eine Ausführungsform, bei der die Vorspannung der Kraftspeichermittel 4, insbesondere in Abhängigkeit der zu ladenden Zuladung 10 einstellbar ist und/oder eine Vorspannung von fakultativen hier nicht gezeigten Abstützkraftspeichermitteln, mit denen die Abstützmittel 6 bei Bedarf gegenüber dem Fahrgestell 5 federnd gelagert sein können. Ebenso ist es denkbar, den Abstand der Abstützfläche bezogen auf den zustand gemäß Fig. 1a ohne Last relativ zum Untergrund zur Einstellung des Federweges und damit eines Restfederweges der Feder einzustellen.

Ganz besonders bevorzugt erfolgt mindestens eine der vorgenannten Einstellungen in Abhängigkeit der zu bestimmenden Gewichtskraft oder eines zu bestimmenden Gewichtskraftanteils der Zuladung 10. Hierzu können beispielsweise wie in Fig. 1 angedeutet Messmittel (Kraftmessmittel) 11 vorgesehen werden, beispielsweise auf dem Fahrgestell 5, mit denen die Gewichtskraft einer Zuladung bestimmbar ist. In Abhängigkeit dieser Gewichtskraft, welche alternativ auch außerhalb des Mecanumradfahrzeugs 1 bestimmt werden kann, werden dann manuell oder über Aktuatormittel eine der vorgenannten Einstellungen vorgenommen, wobei es ganz besonders bevorzugt ist, wenn dies automatisch in Abhängigkeit eines Sensorsignals der Messmittel 11 durch entsprechende Ansteuerungen der Aktuatormittel mit Hilfe von Steuermitteln erfolgt.

Fig. 2 zeigt eine mögliche Ausführungsform eines Mecanumradfahrzeuges 1, welches nach dem Konzept der Erfindung ausgebildet ist von unten. Zu erkennen sind die vier, die Ecken eines gedachten Rechtecks, begrenzenden Mecanumradantriebe 2, die jeweils ein Mecanumrad 3 umfassen, welches mittels eines Antriebs, hier jeweils eines elektromotorischen Antriebes 12 zur Gewährleistung eines omnidirektionalen Betriebs antreibbar ist. Die Antriebe 12 werden dabei von Steuermitteln 13 in eine individuelle Richtung und/oder mit einer individuellen Geschwindigkeit angetrieben.

Jedes Mecanumrad umfasst eine Mehrzahl von über einen Umfang des Rades verteilt angeordneten, bevorzugt tonnenförmigen Rollen, deren Rollendrehachsen winklig zu den Mecanumraddrehachsen angeordnet ist, wobei bevorzugt die Mecanumraddrehachsen zweier benachbarter Mecanumräder fluchten und die Mecanumraddrehachse zweier Mecanumradpaare parallel zueinander ausgerichtet sind.

Zu erkennen ist das Fahrgestell 5, gegenüber welchem die Mecanumradantriebe 2 federnd gelagert sind. Das Fahrgestell 5 trägt zudem Abstützmittel 6 zum Tragen einer Last.

Fig. 3 zeigt stark schematisiert eine bevorzugte Ausführungsform eines Mecanumradfahrzeuges 1. Die Mecanumradantriebe 2 sind über Stützarme 14 verschwenkbar an dem Fahrgestell 5 angelenkt. Dem Stützarm 14 sind jeweils Kraftspeichermittel 4 in Form von Torsionsfedern zugeordnet, wobei die Torsionsfedern bevorzugt mit separaten, nicht gezeigten Antrieben zur Variation der Kraftspeichermittelvorspannung vorspannbar sind. Selbstverständlich sind zusätzlich oder alternativ zu Torsionsfedern auch anders gestaltete Federn z.B. Gasdruckfedern oder Schraubenfedern einsetzbar.

Zu erkennen ist auch hier, dass neben den Mecanumrädern 3 Abstützmittel 6 vorgesehen sind, mit welchen ein Teil einer zu tragenden Zuladung auf einem Untergrund abstützbar ist.

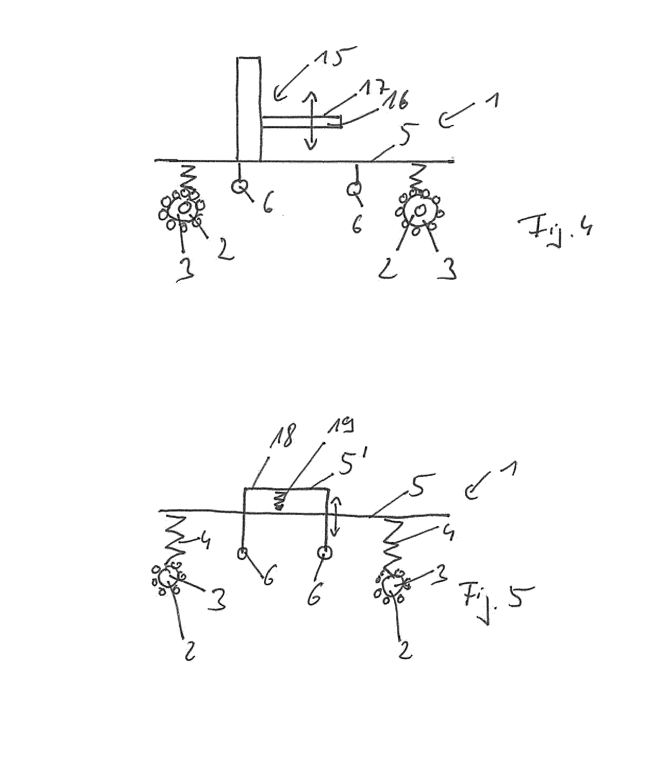

Fig. 4 zeigt in einer stark schematisierten Ansicht ein Mecanumradfahrzeug 1, welches von seinem prinzipiellen Aufbau dem Ausführungsbeispiel gemäß Fig. 1a bis 2 entspricht. Auf dem Fahrgestell 5 befinden sich Hebemittel 15 (Abstandsvariationsmittel) zum Verändern eines Abstandes zwischen einer von den Hebemitteln 15 definierten Auflagefläche 17 für eine zu transportierende Last und dem Fahrgestell 5. In dem konkreten Ausführungsbeispiel umfassen die Hebemittel 15 eine Hebegabel 16, die mit einem geeigneten, beispielsweise elektromotorischen Antrieb relativ zum Fahrgestell 5 höhenverstellbar angeordnet ist.

Alternative Hebemittel 15, beispielsweise in Form einer über eine Kolbenzylinderanordnung, einen Spindeltrieb oder ein Scherengelenkantrieb oder dgl. Antriebe höhenverstellbare Plattformen sind zusätzlich oder alternativ realisierbar. Bevorzugt umfassen die Antriebe einen Motor, insbesondere einen Elektromotor.

Fig. 5 zeigt eine alternative Ausführungsform eines Mecanumradfahrzeuges 1 mit Mecanumradantrieben 2 sowie Abstützmitteln 6, die bei nicht Beaufschlagung mit einer Zuladung analog zu dem Ausführungsbeispiel gemäß den Figuren 1a und 1b vom Untergrund abgehoben sind. Die Abstützmittel 6 umfassen rotierbar und lenkbar angeordnete Rollen, die an einem höhenverstellbaren Fahrgestellabschnitt des Fahrgestells 5, welcher in dem gezeigten Ausführungsbeispiel als Tragelement 18 bezeichnet ist festgelegt sind, welches wieder höhenverstellbar an dem Fahrgestell 5 festgelegt ist. Mit anderen Worten sind die Abstützmittel 6 höhenverstellbar am Fahrgestell 5 fixiert. Das Traggestell 18 stützt sich über ein Federelement 19 am Fahrgestell 5 ab und dient zur Aufnahme einer Zuladung. Die Federsteifigkeit des Federelementes 19 ist dabei geringer als die Federsteifigkeiten der Kraftspeichermittel 4, wodurch sich das Tragelement 18 bei Lastbeaufschlagung absenkt, bis die Abstützmittel 6 bzw. deren Abstützfläche den Untergrund erreichen, wobei in diesem Zustand ein Restfederweg der Kraftspeichermittel 4 sichergestellt ist, so dass nur eine Teilgewichtskraft über die Mecanumräder 3 am Untergrund abgestützt wird.

### Bezugszeichenliste

- 1: Mecanumradfahrzeug
- 2: Mecanumradantrieb
- 3: Mecanumräder
- 4: Kraftspeichermittel
- 5: Fahrgestell
- 6: Abstützmittel
- 7: Drehachse
- 8: Gelenkachse
- 9: Abstützfläche
- 10: Zuladung
- 11: Messmittel
- 12: Antriebe der Mecanumradantriebe
- 13: Steuermittel
- 14: Stützarme
- 15: Hebemittel
- 16: Hebegabel
- 17: Auflagefläche
- 18: Tragelement
- 19: Federelement

- U: Untergrund

## Patentansprüche

1. Mecanumradfahrzeug, insbesondere zum Transportieren einer Zuladung,
- mit mehreren, insbesondere drei oder vier, Mecanumradantrieben (2), jeweils umfassend mindestens ein Mecanumrad und mindestens einen, insbesondere elektromotorischen, Antrieb,
- mit zum Ansteuern der Mecanumradantriebe (2) für einen omnidirektionalen Betrieb ausgebildeten Steuermitteln (13),
- mit einem Fahrgestell (6), dessen Gewichtskraft sowohl über die Mecanumräder (3) als auch über zusätzlich zu den Mecanumrädern (3) vorgesehene Abstützmittel (6) des Fahrzeugs auf einem Untergrund (U) abstützbar ist,
wobei die Mecanumräder (3), insbesondere gemeinsam mit den zugehörigen Antrieben, zum Begrenzen des über die Mecanumräder (3) auf dem Untergrund (U) abzustützenden Gewichtskraftanteils des Fahrgestells (5) und einer etwaigen von diesem zu tragenden Zuladung (10) mit Hilfe von Kraftspeichermitteln (4) federnd gegenüber dem Fahrgestell gelagert sind.

2. Fahrzeug nach Anspruch 1,
**dadurch gekennzeichnet,**
**dass** die Abstützmittel (6) mindestens ein beim Fahren des Fahrzeuges um eine Drehachse (7) rotierbares Lastrad aufweisen, welches bei einem Richtungswechsel des Fahrzeuges um eine Gelenkachse rotierbar ist und/oder dass die Abstützmittel (6) eine rotierbar angeordnete Kugel zum Abstützen auf dem Untergrund (U) aufweisen.

3. Fahrzeug nach einem der Ansprüche 1 oder 2,
**dadurch gekennzeichnet,**
**dass** die Kraftspeichermittel (4) derart ausgebildet und angeordnet sind, dass die Abstützmittel (6) bei nicht mit einer Zuladung (10) beaufschlagtem Fahrgestell (5) oberhalb einer von den Mecanumrädern (3) definierten Abstützebene angeordnet sind und sich bei Beaufschlagen mit einer Zuladung (10) bei gleichzeitiger Erhöhung der Federspannung der Kraftspeichermittel (4), insbesondere zusammen mit dem Fahrgestell (5), absenken in Richtung Untergrund (U)..

4. Fahrzeug nach Anspruch 3,
**dadurch gekennzeichnet,**
**dass** der Abstand zwischen einer von den Abstützmitteln (6) gebildeten Abstützfläche (6) und der von den Mecanumrädern (3) definierten Abstützebene einstellbar ist.

5. Fahrzeug nach einem der Ansprüche 3 oder 4,
**dadurch gekennzeichnet,**
**dass** eine maximale Federwegkomponente der Kraftspeichermittel (4) parallel zu einer Verstellrichtung des Fahrgestells (5) bei Beaufschlagung mit einer Zuladung (10), ohne Zuladung (10) größer ist als der in die gleiche Richtung gemessene Abstand zwischen einer Abstützfläche der Abstützmittel (6) und der von den Mecanumrädern (3) definierten Abstützebene.

6. Fahrzeug nach einem der vorhergehenden Ansprüche,
**dadurch gekennzeichnet,**
**dass** die Abstützmittel (6) nicht federnd gegenüber dem Fahrgestell (5) gelagert sind, oder derart über Abstützkraftspeichermittel gegenüber dem Fahrgestell (5) federnd gelagert sind, dass eine Federsteifigkeit der Abstützkraftspeichermittel größer ist einer Federsteifigkeit der Kraftspeichermittel (4).

7. Fahrzeug nach einem der vorhergehenden Ansprüche,
**dadurch gekennzeichnet,**
**dass** eine Vorspannung der Kraftspeichermittel (4) und/oder ein Federweg der Kraftspeichermittel zum Einstellen des maximal von den Mecanumrädern (3) auf dem Untergrund abzustützenden Gewichtsanteils, manuell oder mittels Aktuatormitteln, einstellbar ist.

8. Fahrzeug nach einem der vorhergehenden Ansprüche,
**dadurch gekennzeichnet,**
**dass** das Mecanumradfahrzeug (1) Messmittel (11) zum Bestimmen einer Gewichtskraft oder eines Gewichtskraftanteils des Fahrgestells (5) und/oder einer Zuladung (10) aufweist, und dass die Messmittel (11) signalleitend mit Steuermitteln (13) zum Ansteuern der Aktuatormittel zum Einstellen der Vorspannung der Kraftspeichermittel (4) und/oder des Federweges in Abhängigkeit eines Sensorsignals der Messmittel (11) verbunden sind.

9. Fahrzeug nach einem der vorhergehenden Ansprüche,
**dadurch gekennzeichnet,**
**dass** auf dem Fahrgestell (5) eine, insbesondere kippbare, Ladeinrichtung, bevorzugt eine Ladewanne, zur Aufnahme einer Zuladung (10) angeordnet ist.

10. Fahrzeug nach einem der vorhergehenden Ansprüche,
**dadurch gekennzeichnet,**
**dass** auf dem Fahrgestell (5), insbesondere mittels eines Aktuators, bevorzugt umfassend einen Kolben-Zylinderantrieb und/oder einen Scherengelenkantrieb, antreibbare, Hebemittel (15), insbesondere mit einer Hebegabel (16) oder einer Hebeplattform, zum Anheben einer Zuladung (10) relativ zum dem Fahrgestell (5) angeordnet sind.

11. Fahrzeug nach einem der vorhergehenden Ansprüche,
**dadurch gekennzeichnet,**
**dass** die Mecanumräder (3), insbesondere zusammen mit den Antrieben, über, insbesondere mittels Torsionsfedern, federnd gelagerte, verschwenkbare Stützarme (!4) an dem Fahrgestell (5) angeordnet sind, derart dass sich durch Verschwenken der Stützarme (14) die Federspannung der Kraftspeichermittel (4) ändert und/oder dass die Federvorspannung der Kraftspeichermittel (4) durch aktives Einstellen der Verschwenkwinkel der Stützarme (14), insbesondere mit Hilfe von Aktuatormitteln oder manuell, einstellbar ist.

12. Fahrzeug nach einem der vorhergehenden Ansprüche,
**dadurch gekennzeichnet,**
**dass** die Mecanumräder (3) mehrere Felgen mit jeweils über deren Umfang verteilt angeordneten, relativ zu der jeweiligen Felge verdrehbar gelagerten Rollen aufweisen und dass mindestens zwei benachbarte der Felgen über Dämpfungsmittel miteinander verbunden sind, die eine gedämpfte, begrenzte Relativbewegung der Felgen in Umfangsrichtung und/oder senkrecht zu einer Mecanumraddrehachse und/oder senkrecht zu einer Felgendrehachse der Felgen und/oder kippwinklig zueinander zulassend ausgebildet sind.

13. System, umfassend ein Mecanumradfahrzeug (1) nach einem der vorhergehenden Ansprüche und eine von diesem getragene Zuladung (10), wobei eine Gewichtskraft der Zuladung (10) anteilig über die Mecanumräder (3) und anteilig über die Abstützmittel (6) auf einem Untergrund (U) abgestützt ist.

14. System nach Anspruch 13,
**dadurch gekennzeichnet,**
**dass** die Kraftspeichermittel (4) bei aufgebrachter Zuladung (10) um einen Restfederweg, insbesondere zum Ausgleich von Unebenheiten der Untergrundes (U), komprimierbar sind.

15. Verfahren zum Betreiben eines Mecanumradfahrzeuges nach einem der Ansprüche 1 bis 12,
**dadurch gekennzeichnet,**
**dass** ein Teil der Gewichtskraft des Fahrgestells (5) und/oder einer etwaigen Zuladung (10) über die Mecanumräder (3) und der andere Teil der Gewichtskraft über die Abstützmittel (6) auf dem Untergrund (U) abgestützt wird.

16. Verfahren nach Anspruch 15,
**dadurch gekennzeichnet,**
**dass** die Gewichtskraft einer Zuladung (10) gemessen wird, insbesondere auf dem Mecanumradfahrzeug (1), und dass eine Vorspannung der Kraftspeichermittel (4) und/oder ein Federweg der Kraftspeichermittel (4) in Abhängigkeit der gemessenen Gewichtskraft eingestellt werden/wird.
